# EUROPÄISCHE PATENTSCHRIFT

(11) **EP 2 495 138 B1**
(45) Veröffentlichungstag und Bekanntmachung des Hinweises auf die Patenterteilung: **02.04.2014**
(21) Anmeldenummer: 12150852.7
(22) Anmeldetag: 12.01.2012
(51) Int. Cl.: B60R 21/217

(54) **Airbaggehäuse mit integrierter Generatorstruktur**
Airbag housing with integrated generator structure
Boîtier d'airbag doté d'une structure de générateur intégrée

(30) Priorität: 04.03.2011 DE 102011005081
(43) Veröffentlichungstag der Anmeldung: 05.09.2012
(73) Patentinhaber: ZF Friedrichshafen AG, 88038 Friedrichshafen (DE)
(72) Erfinder: Wagener, Keit, 49143 Bissendorf (DE); Imken, Hans-Juergen, 49163 Bohmte (DE); Rick, Ulrich, 55595 Braunweiler (DE)

(56) Entgegenhaltungen:
- WO-A2-03/047917
- DE-A1- 4 338 666
- DE-A1- 10 150 275
- DE-A1-102005 004 452
- US-A1- 2003 230 873

## Beschreibung

Die Erfindung betrifft ein Gehäuse für einen aufblasbaren Airbag in einem Kraftfahrzeug, gemäß dem Oberbegriff des Patentanspruchs 1.

Leergewichte von Kraftfahrzeugen haben in den vergangenen Jahren zugenommen. Die Ursachen hierfür liegen einerseits in den zunehmenden Kraftfahrzeug-Basisausstattungen, womit hauptsächlich den Komfortansprüchen der Käufer entsprochen wird. Zum anderen haben die gestiegenen Anforderungen an das dynamische Fahrverhalten zu leistungsstärkeren Motoren, Bremsen und Servolenkungen sowie zu Zusatzfunktionen wie ABS, ESP usw. geführt, die ebenfalls zur Erhöhung der Kraftfahrzeugmasse beigetragen haben. Darüber hinaus wurden auf Grund steigenden Sicherheitsbewusstseins diverse Sicherheitseinrichtungen entwickelt, die mittlerweile zur Serienausstattung von vielen Kraftfahrzeugen gehören. In diesem Zusammenhang ist auch die zunehmende Zahl der Airbags zu nennen, die - insbesondere aufgrund der für einen Airbag jeweils notwendigen Gehäusestruktur - einen nicht unerheblichen Einfluss auf das Leergewicht des Kraftfahrzeuges haben.

Gehäuse für Kraftfahrzeugairbags bestehen im Allgemeinen aus einem Behälter, in dem ein Gasgenerator sowie ein gefalteter Luftsack enthalten sind. Gattungsgemäße Airbag-Gehäuse sind häufig aus Metall, insbesondere aus umgeformten Blechteilen, oder aus stranggepresstem Leichtmetall hergestellt. Auch sind Airbaggehäuse aus Leichtmetalldruckguss oder Kunststoffspritzguss bekannt.

Bekannt sind Gehäuse für aufblasbare Gassäcke in unterschiedlichen Varianten, beispielsweise als Fahrer-/Beifahrerairbag, als Seitenairbag oder als Kopfairbag u.dgl. So geht beispielsweise aus der WO 03/047917 A2 ein Fahrerairbag mit einem schlauchförmigen Luftsack hervor. Die Schläuche des Luftsacks zerreißen nach einem Auslösen des Airbags durch den sich in ihrem Innenraum aufbauenden Gasdruck eine Abdeckhaut des Airbags. Aus der DE 41 41 617 A1 geht ein Fahrzeugairbagmodul hervor, bei dem ein gefalteter Airbag und eine Aufblasvorrichtung gemeinsam in einem Gehäuse untergebracht sind und als komplette Baueinheit in das Fahrzeug eingesetzt werden. Das Gehäuse weist bei der in dieser Schrift dargestellten Lösung zwei Abteile auf, ein vorderes und ein hinteres Abteil. In das hintere Abteil wird eine Aufblasvorrichtung eingesetzt. Diese besteht aus einem zylindrischen, äußeren Gehäuse, in dem eine Vielzahl von Düsen ausgebildet sind. Das zylindrische äußere Gehäuse der Aufblasrichtung wird als Diffusor bezeichnet, welcher wiederum zur Aufnahme des Gasgenerators dient. Die Bohrungen des Diffusors sind so im Gehäuse der Airbageinheit angeordnet, dass ein gerichtetes Ausströmen des Gases in den Airbag erfolgen kann. Ohne einen Diffusor käme es zu einer ungleichmäßigen Ausbreitung des Gases, nachdem der Gasgenerator gezündet hat. Dies wäre nicht wünschenswert, da der Airbag in Bruchteilen von Sekunden sicher, zuverlässig und gleichmäßig aufgeblasen werden muss, um seiner Bestimmung gemäß zu funktionieren.

Die gesamte Gehäusekonstruktion ist bei der in dieser Schrift gezeigten Ausführung aus mehreren Blech-Einzelteilen zusammengesetzt. Neben der fertigungstechnisch aufwendigen Herstellung hat ein derartiges Gehäuse den Nachteil eines hohen Eigengewichtes. Um diese Nachteile auszugleichen, wird in der DE 43 38 666 A1 vorgeschlagen, ein Gehäuse für einen Airbag aus Kunststoff auszubilden. Auch dieses Airbaggehäuse weist einen Raum für die Aufnahme eines Gasgenerators auf, der mit einem Raum zur Aufnahme eines gefalteten Luftsackes in Strömungsverbindung steht, wobei der Raum zur Aufnahme des aufblasbaren Luftsackes eine offene Seite aufweist, durch die der sich ausbreitende Luftsack austreten kann.

Kunststoff bringt zwar bereits eine Gewichtsersparnis im Vergleich zu metallischen Gehäusewerkstoffen mit sich. Auch bei diesem aus dem Stand der Technik bekannten Airbag-Gehäuse ist es jedoch zur Erreichung einer optimalen Ausströmung des Gases beim Aufblasen des Airbags noch erforderlich, einen Diffusor einzusetzen. Der Diffusor besteht bei diesem bekannten Stand der Technik aus einem zylindrischen Aluminiumformteil, in das zusätzlich wiederum der Gasgenerator eingesetzt ist. Nachdem der Diffusor in den dafür im Gehäuse vorgesehenen Raum eingesetzt worden ist, erfolgt die Montage des Gasgenerators. Insgesamt ergibt sich damit nach wie vor ein vergleichsweise komplizierter Aufbau mit zahlreichen zu montierenden Einzelteilen, insbesondere mit der Notwendigkeit eines Diffusorgehäuses, welches wiederum den eigentlichen Gasgenerator enthält. Da zudem sowohl das Diffusorgehäuse sowie der Gasgenerator beim Stand der Technik üblicherweise im Wesentlichen aus metallischen Werkstoffen bestehen, wobei insbesondere der Gasgenerator vergleichsweise massiv ausgebildet, ist mit den bekannten Bauweisen für Airbaggehäuse üblicherweise ein relativ hohes Gewicht verbunden.

Aus der DE 43 38 243 A1 ist ein Airbaggehäuse gemäß Oberbegriff des Anspruchs 1 der vorliegenden Erfindung bekannt.

Mit diesem Hintergrund ist es somit die Aufgabe der vorliegenden Erfindung, ein Airbaggehäuse zu schaffen, mit dem die genannten, im Stand der Technik vorhandenen Einschränkungen überwunden werden. Mit der Erfindung sollen dabei insbesondere kostengünstig herstellbare Airbaggehäuse geschaffen werden, die mit wenigen Bauteilen und geringem Gewicht ausgeführt werden können, und die somit das Leergewicht eines Kraftfahrzeuges, in welches sie eingebaut werden, nur unwesentlich erhöhen.

Diese Aufgabe wird durch ein Airbaggehäuse mit den Merkmalen des Patentanspruchs 1 gelöst.

Bevorzugte Ausführungsformen sind Gegenstand der Unteransprüche.

In für sich genommen zunächst bekannter Weise umfasst das Airbaggehäuse gemäß der vorliegenden Erfindung eine Generatorkammer und eine Luftsackkammer. Dabei ist in der Generatorkammer ein Gasgenerator und in der Luftsackkammer ein gefalteter, aufblasbarer Luftsack aufnehmbar. Der Gasgenerator umfasst einen Generatorkern mit einer Treibladung sowie eine Zündeinheit und eine Generatorhülle.

Erfindungsgemäß zeichnet sich das Airbaggehäuse jedoch dadurch aus, dass zumindest Teile der Generatorhülle durch das Airbaggehäuse selbst gebildet sind.

Auf diese Weise lässt sich dank der Erfindung weitestgehende Integration zwischen den bisher grundsätzlich stets eigenständigen, separaten Baugruppen "Gasgenerator" und "Airbaggehäuse" erreichen, wodurch erhebliche, bisher im Bereich des Gasgenerators und/oder im Bereich des Diffusors erforderliche Bauteilumfänge entfallen, bzw. durch Abschnitte des ohnehin vorhandenen Airbaggehäuses ersetzt werden können.

Nach der Erfindung sind Generatorkammer und Luftsackkammer des Airbaggehäuses einstückig ausgebildet. Auf diese Weise umfasst die erfindungsgemäße Integration zwischen Airbaggehäuse und Gasgenerator nicht nur die Generatorkammer des Airbaggehäuses, sondern im Wesentlichen das gesamte, gemäß dieser Ausführungsform einstückig ausgeführte Airbaggehäuse.

Nach der Erfindung umfasst die - erfindungsgemäß zumindest teilweise Bestandteil des Airbaggehäuses darstellende - Generatorhülle eine Oberschale und eine Unterschale, wobei vorzugsweise entweder Oberschale oder Unterschale einstückig mit dem Airbaggehäuse ausgebildet sind.

Nach der Erfindung ist die Gasgenerator-Oberschale durch eine mit der Generatorkammer und/oder mit der Luftsackkammer verbindbare Diffusorkappe gebildet. Die Verbindung zwischen der Diffusorkappe und der Generatorkammer, bzw. zwischen der Diffusorkappe und der Luftsackkammer ist dabei gemäß einer weiteren Ausführungsform vorzugsweise als Schnappverbindung ausgebildet.

Gemäß einer weiteren bevorzugten Ausführungsform der Erfindung ist ferner die Zündeinheit unmittelbar in einer Durchbruchausnehmung einer Wandung der Generatorkammer bzw. einer Wandung der Generator-Unterschale angeordnet. Vorzugsweise ist die Durchbruchausnehmung zur Aufnahme der Zündeinheit dabei durch unmittelbares Umspritzen der Zündeinheit bereits bei der Urformung der Unterschale, des Airbaggehäuses ausgebildet. Auf diese Weise ergibt sich eine noch höhere Funktionsintegration, indem die Zündeinheit bereits bei der Fertigung der Unterschale bzw. des Airbaggehäuses (falls die Unterschale einstückiger Bestandteil des Airbaggehäuses ist) mit eingespritzt bzw. umspritzt wird, wodurch ein späterer, zusätzlicher Montageschritt zum Einbau der Zündeinheit entfällt.

Gemäß einer weiteren bevorzugten Ausführungsform der Erfindung umfassen Oberschale und/oder Unterschale der - erfindungsgemäß zumindest teilweise durch das Airbaggehäuse gebildeten - Generatorhülle bereichsweise eingeformte oder umspritzte Langfaser- oder Endlosfaserverstärkungen, bzw. bereichsweise eingeformte oder umspritzte metallische Verstärkungselemente. Auf diese Weise lässt sich die Funktion der gemäß dem Stand der Technik noch separat notwendigen Generatorhülle besonders effektiv, material- und gewichtssparend in das Airbaggehäuse integrieren, indem die im Bereich der Treibladung zunächst auftretenden hohen Gasdrücke mittels der eingeformten metallischen oder Faserverstärkungen direkt am Ort der Entstehung aufgenommen und abgeleitet werden können.

Nach der Erfindung ist vorgesehen, dass ein umlaufender Rand des Luftsacks zwischen der. Diffusorkappe und dem Airbaggehäuse klemmend aufgenommen ist. Auf diese Weise erhält die Diffusorkappe eine vorteilhafte Doppelfunktion als Diffusor und gleichzeitig als Befestigungsmittel für den Luftsack. Zudem wird durch den eingeklemmten, umlaufenden Rand des Luftsacks auf diese Weise in einem Schritt ein dichter Abschluss zwischen Diffusorkappe, Luftsack und Airbaggehäuse bzw. Gasgenerator-Unterschale gebildet.

Wesentlich ist bei der Erfindung, dass die Generatorhülle zumindest teilweise entfällt, da diese zumindest teilweise durch das Airbaggehäuse selbst gebildet ist. Hiermit entfällt somit auch die Funktion der Generatorhülle als Aufnahmebehälter für die Treibladung, welche gemäß dieser Ausführungsform somit durch den dünnwandigen Behälter übernommen werden kann.

Eine ebenfalls bevorzugte, weitere Ausführungsform der Erfindung sieht vor, dass an der Diffusorkappe eine Filtermembran zum Einschluss der Treibladung angeordnet ist. Vorzugsweise ist die Filtermembran dabei durch einen Metallfilter gebildet. Auf diese Weise lässt sich auch die Aufgabe des kontrollierten Entweichens der von der Treibladung freigesetzten Verbrennungsgase und deren gleichzeitige Abkühlung beim Durchströmen des Metallfilters in die erfindungsgemäß integrierte Einheit aus Generatorhülle und Airbaggehäuse aufnehmen. Der Metallfilter kommt aufgrund seiner Positionierung an der Diffusorkappe dabei jeweils in der korrekten Position zwischen der Treibladung einerseits und den Diffusoröffnungen andererseits zu liegen.

Zusammen mit einer der vorstehenden Ausführungsformen (einstückig mit dem Airbaggehäuse ausgebildete Gasgenerator-Unterschale) bieten die Ausführungsformen mit Diffusorkappe insgesamt den Vorteil, dass Airbaggehäuse und Gasgenerator wiederum mit einem Minimum an Bauteil- und Montageaufwand dargestellt werden können. Dabei bildet das Airbaggehäuse die Gasgenerator-Unterschale, während die Gasgenerator-Oberschale jeweils durch die Diffusorkappe gebildet wird.

Dies bedeutet mit anderen Worten, dass eine im Stand der Technik zuvor noch eigens notwendige Generatorhülle auf diese Weise vollständig entfallen kann, bzw. dass die Funktion der Generatorhülle durch ein Zusammenwirken von Gehäusebereichen des Airbaggehäuses mit der Diffusorkappe erfüllt wird. Auch hierdurch entfallen (mit dem Wegfall der Generatorhülle) wieder wesentliche Bauteilumfänge und dementsprechende Bauteilmassen bzw. Kosten bei Produktion und Montage der AirbagBaugruppe.

Ein weiterer Vorteil der Erfindung besteht darin, dass aufgrund des erfindungsgemäß ermöglichten Wegfalls der (üblicherweise metallischen) Generatorhülle, und deren Ersatz bzw. Integration in die Struktur des Airbaggehäuses selbst, aufgrund der sehr viel geringeren spezifischen Wärmekapazität der Kunststoffmaterialien des Airbaggehäuses im Vergleich zur bisherigen metallischen Generatorhülle ein gleichmäßigerer Airbag-Gasoutput bei unterschiedlichsten Umgebungstemperaturen erreicht werden kann. Zudem kann die (sicherheitsrelevanten) Restwärme, die nach der Zündung in einem Airbagmodul verbleibt, ebenfalls aufgrund des erfindungsgemäß ermöglichten Entfalls der metallischen Generatorhülle deutlich reduziert werden.

Im Folgenden wird die Erfindung anhand lediglich Ausführungsbeispiele darstellender Zeichnungen näher erläutert. Dabei zeigt:
- Fig. 1: in isometrischer Explosionsdarstellung eine Ausführungsform eines erfindungsgemäßen Airbaggehäuses mit Luftsack und Diffusorkappe;
- Fig. 2: in isometrischer Darstellung das Airbaggehäuse gemäß Fig. 1 im Zusammenbau;
- Fig. 3: in einer Fig. 1 entsprechenden Darstellung eine weitere Ausführungsform eines erfindungsgemäßen Airbaggehäuses mit Luftsack und Diffusorkappe;
- Fig. 4: in isometrischer Darstellung das Airbaggehäuse gemäß Fig. 3 im Zusammenbau.

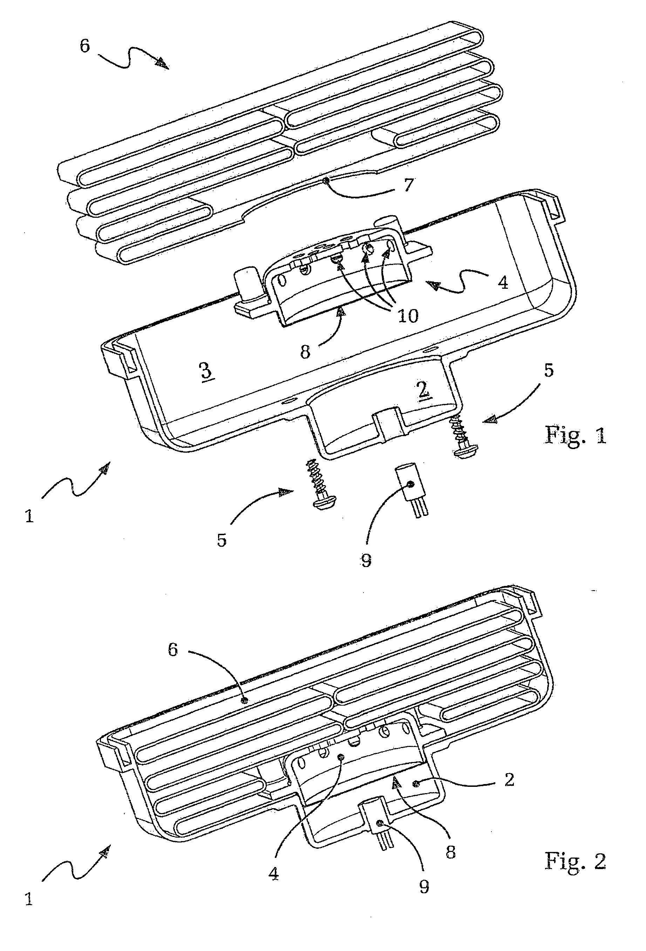

Fig. 1 zeigt in Explosionsdarstellung eine erste Ausführungsform eines Airbaggehäuses 1 gemäß der vorliegenden Erfindung. Man erkennt, dass das Airbaggehäuse 1 einstückig eine Generatorkammer 2 sowie eine Luftsackkammer 3 umfasst. Wie eine Zusammenschau mit Fig. 2 ergibt, wird die Generatorkammer 2 durch eine Diffusorkappe 4 abgeschlossen, welche mittels einer Schraubverbindung 5 mit dem Airbaggehäuse 1 verbunden wird.

Die Generatorkammer 2 ist dabei zur unmittelbaren Aufnahme eines (nicht dargestellten) Generatorkerns mit einer Treibladung ausgebildet, wodurch die beim Stand der Technik bisher stets notwendige eigene (metallische) Generatorhülle entfällt, bzw. durch die einstückig mit dem Airbaggehäuse 1 ausgebildete Generatorkammer 2, im Zusammenwirken mit der Diffusorkappe 4 ersetzt wird.

Dies bedeutet mit anderen Worten, dass die Treibladung im Wesentlichen unmittelbar in der Generatorkammer 2 angeordnet werden kann, beispielsweise direkt in Form von Treibladungstabletten, oder portioniert und aufgenommen in einem dünnwandigen Folien- oder Gewebebeutel. Auf diese Weise werden bereits erhebliche Bauteilumfänge und erhebliche Baugruppenmassen ebenso wie entsprechende Herstellungs- und Montagekosten eingespart.

Die Diffusorkappe 4 erfüllt bei der dargestellten Ausführungsform die zusätzliche Funktion der Abdichtung und Befestigung des Luftsacks 6 relativ zur Luftsackkammer 3, indem der Randbereich 7 des Luftsacks 6 bei der Verschraubung 5 von Diffusorkappe 4 und Airbaggehäuse 1 zwischen Diffusorkappe 4 und Airbaggehäuse 1 dicht klemmend fixiert wird.

Weitere Vereinfachungen und Gewichts- sowie Kosteneinsparungen ergeben sich bei der dargestellten Ausführungsform des erfindungsgemäßen Airbaggehäuses durch die Integration eines Gasgenerator-Metallfilters 8 in die Diffusorkappe 4, sowie die Integration einer Zündeinheit 9 unmittelbar in das Airbaggehäuse 1 bzw. in die hier einstückig mit dem Airbaggehäuse 1 ausgebildete Generatorkammer 2. Der Metallfilter 8 dient dem Einschluss der Treibladung in der (einstückig mit dem Airbaggehäuse 1 ausgebildeten) Generatorkammer 2 sowie der Filterung und Abkühlung der expandierenden Treibgase nach der Auslösung des Airbags, bevor diese in die Diffusorkappe 4 und von dort durch die Diffusoröffnungen 10 der Diffusorkappe in den Luftsack eintreten. Die Zündeinheit 9 kann insbesondere bereits bei der Urformung des Airbaggehäuses 1 in dessen Wandung durch Umspritzung montiert werden, wodurch ein späterer Montageschritt bzw. zusätzliche Befestigungsmittel entfallen können.

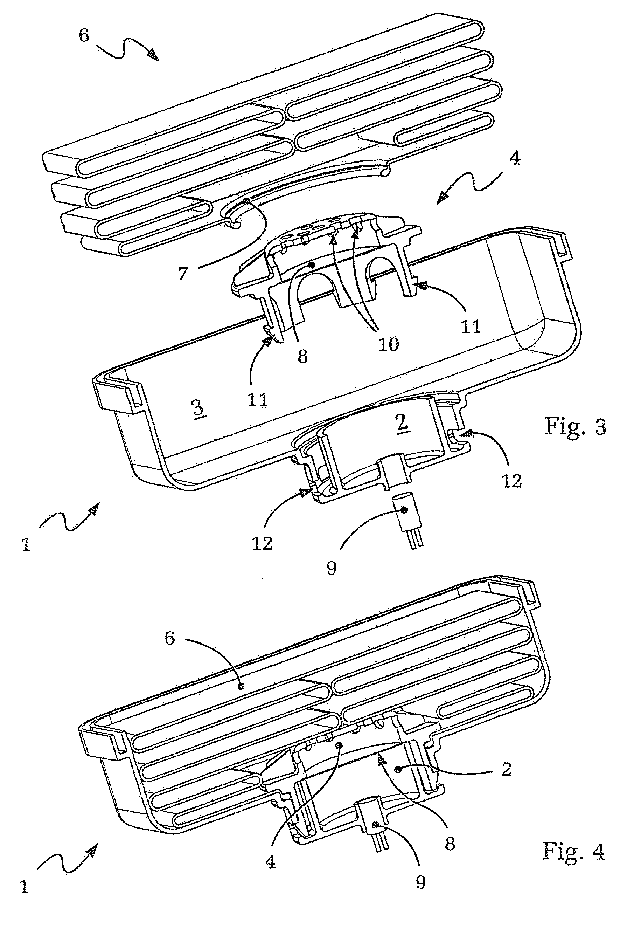

Die Fig. 3 und 4 zeigen eine weitere Ausführungsform eines Airbaggehäuses gemäß der vorliegenden Erfindung. Man erkennt wieder das eigentliche Airbaggehäuse 1, welches auch bei der Ausführungsform gemäß Fig. 3 und 4 wieder einstückig die Generatorkammer 2 sowie die Luftsackkammer 3 umfasst. Auch hier wird die Generatorkammer 2 wieder durch eine Diffusorkappe 4 abgeschlossen. Im Unterschied zu der Ausführungsform gemäß Fig. 1 und 2 erfolgt die Verbindung der Diffusorkappe 4 mit dem Airbaggehäuse 1, und damit der Abschluss der Generatorkammer 2, durch eine Schnappverbindung 11, 12 zwischen Diffusorkappe 4 und Generatorkammer 2.

Schnappverbindung 11, 12 sowie Generatorkammer 2 und Diffusorkappe 4 sind dabei so ausgebildet, dass sich im montierten Zustand gemäß Fig. 4 eine mehrwandige Gestaltung der Generatorkammer 2 ergibt, was vorteilhaft im Hinblick auf den sich bei der Zündung des Airbags in der Generatorkammer 2 entwickelnden hohen Gasdruck und die damit verbundenen Belastungen der Wandungen der Generatorkammer 2 ist.

Auch bei der Ausführungsform des Airbaggehäuses gemäß Fig. 3 und 4 erfüllt die Diffusorkappe 4 die zusätzliche Aufgabe der Abdichtung und Befestigung des Luftsacks 6, indem bei der Montage der Diffusorkappe 4 ein Randbereich 7 des Luftsacks 6 zwischen Diffusorkappe 4 und Airbaggehäuse 1 klemmend aufgenommen und fixiert wird. Die Integration des Metallfilters 8 und der Zündeinheit 9 erfolgt bei der Ausführungsform gemäß Fig. 3 und 4 auf ähnliche Weise, wie bereits hinsichtlich der Ausführungsform gemäß Fig. 1 und 2 beschrieben.

Insgesamt kommt auch das Airbaggehäuse gemäß Fig. 3 und 4 wieder mit einem Minimum an Einzelbauteilen sowie mit einer minimalen Anzahl an Montageschritten aus, wodurch sich insgesamt eine niedrige Baugruppenmasse und entsprechend geringe Herstellungs- und Montagekosten erzielen lassen.

Im Ergebnis wird somit deutlich, dass mit der Erfindung ein Airbaggehäuse geschaffen wird, das kostengünstig herstellbar ist und eine minimale Anzahl an Bauteilen, sowie eine im Vergleich zum Stand der Technik deutlich reduzierte Masse der Airbagbaugruppe ermöglicht. Insbesondere aufgrund des erfindungsgemäß ermöglichten Wegfalls einer zusätzlichen, eigenständigen Generatorhülle lassen sich neben der Gewichtsersparnis zudem Einsparungen bei Herstellung und Fertigmontage des Airbaggehäuses erzielen.

### Bezugszeichenliste

- 1: Airbaggehäuse
- 2: Generatorkammer
- 3: Luftsackkammer
- 4: Diffusorkappe
- 5: Verschraubung
- 6: Luftsack
- 7: Luftsack-Randbereich
- 8: Metallfilter
- 9: Zündeinheit
- 10: Diffusoröffnungen
- 11, 12: Schnappverbindung

## Patentansprüche

1. Airbaggehäuse (1) mit Generatorkammer (2) und Luftsackkammer (3), wobei in der Generatorkammer (2) der Gasgenerator und in der Luftsackkammer (3) ein gefalteter, aufblasbarer Luftsack (6) aufgenommen ist, der Gasgenerator umfassend einen Generatorkern mit einer Treibladung sowie eine Zündeinheit (9) und eine Generatorhülle, wobei zumindest Teile der Generatorhülle durch das Airbaggehäuse (1) gebildet sind, wobei
- Generatorkammer (2) und Luftsackkammer (3) einstückig ausgebildet sind,
- die Generatorhülle eine Oberschale und eine Unterschale umfasst, und
- die Gasgenerator-Oberschale durch eine mit der Generatorkammer (2) und/oder mit der Luftsackkammer (3) verbindbare Diffusorkappe (4) gebildet ist, **dadurch gekennzeichnet, dass**
- ein umlaufender Rand (7) des Luftsacks (6) zwischen der Diffusorkappe (4) und dem Airbaggehäuse (1) klemmend aufgenommen ist.

2. Airbaggehäuse nach Anspruch 1,
**dadurch gekennzeichnet,**
**dass** die Oberschale oder die Unterschale einstückig mit dem Airbaggehäuse ausgebildet ist.

3. Airbaggehäuse nach Anspruch 1 oder 2, **dadurch gekennzeichnet,**
**dass** die Verbindung zwischen Diffusorkappe (4) und
Generatorkammer (2), bzw. zwischen Diffusorkappe (4) und Luftsackkammer (3) als Schnappverbindung (11, 12) ausgebildet ist.

4. Airbaggehäuse nach einem der vorangehenden Ansprüche, **dadurch gekennzeichnet, dass** die Zündeinheit (9) in einer Durchbruchausnehmung einer Wandung der Generatorkammer (2) angeordnet ist.

5. Airbaggehäuse nach Anspruch 4,**dadurch gekennzeichnet,**
**dass** die Durchbruchausnehmung durch Umspritzen der Zündeinheit (9) bei der Urformung der Unterschale bzw. des Airbaggehäuses ausgebildet ist.

6. Airbaggehäuse nach einem der Ansprüche 1 bis 5,**dadurch gekennzeichnet, dass** Oberschale und/oder Unterschale bereichsweise eingeformte oder umspritzte Langfaser- bzw. Endlosfaserverstärkungen, oder bereichsweise eingeformte oder umspritzte metallische Verstärkungselemente umfassen.

7. Airbaggehäuse nach einem der Ansprüche 2 bis 6, **dadurch gekennzeichnet, dass** an der Diffusorkappe (4) eine Filtermembran zum Einschluss der Treibladung angeordnet ist.

8. Airbaggehäuse nach Anspruch 7,**dadurch gekennzeichnet,**
**dass** die Filtermembran durch einen Metallfilter gebildet ist.

## Claims

1. Airbag housing (1) with a generator chamber (2) and an air-bag chamber (3), wherein a gas generator is accommodated in the generator chamber (2) and a folded, inflatable air bag (6) is accommodated in the air-bag chamber (3), the gas generator comprising a generator core with a propellant charge and also an ignition unit (9) and a generator shell, wherein at least parts of the generator shell are formed by the airbag housing, wherein
- the generator chamber (2) and the air-bag chamber (3) are integrally formed,
- the generator shell comprises an upper shell and a lower shell, and
- the upper shell of the gas generator is formed by a diffuser cap (4) that can be connected to the generator chamber (2) and/or to the air-bag chamber (3), **characterized in that**
- a peripheral rim (7) of the air bag (6) is accommodated in a clamping manner between the diffuser cap (4) and the airbag housing (1).

2. Airbag housing according to Claim 1, **characterized in that** the upper shell or the lower shell is formed integrally with the airbag housing.

3. Airbag housing according to Claim 1 or 2, **characterized in that** the connection between the diffuser cap (4) and the generator chamber (2), or between the diffuser cap (4) and the air-bag chamber (3), is formed as a snap connection (11, 12).

4. Airbag housing according to one of the preceding claims, **characterized in that** the ignition unit (9) is arranged in a breakthrough clearance in a wall of the generator chamber (2).

5. Airbag housing according to Claim 4, **characterized in that** the breakthrough clearance is formed by encapsulating the ignition unit (9) during the original forming of the lower shell or of the airbag housing.

6. Airbag housing according to one of Claims 1 to 5, **characterized in that** the upper shell and/or the lower shell comprise partially moulded-in or encapsulated long-fibre or continuous-fibre reinforcements or partially moulded-in or encapsulated metallic reinforcing elements.

7. Airbag housing according to one of Claims 2 to 6, **characterized in that** a filter membrane for enclosing the propellant charge is arranged on the diffuser cap (4).

8. Airbag housing according to Claim 7, **characterized in that** the filter membrane is formed by a metal filter.

## Revendications

1. Boîtier d'airbag (1) comprenant une chambre de générateur (2) et une chambre de sac d'air (3), le générateur de gaz étant reçu dans la chambre de générateur (2) et un sac d'air plié gonflable (6) étant reçu dans la chambre de sac d'air (3), le générateur de gaz comprenant un noyau de générateur avec une charge propulsive ainsi qu'une unité d'allumage (9) et une enveloppe de générateur, au moins des parties de l'enveloppe de générateur étant formées par le boîtier d'airbag (1),
- la chambre de générateur (2) et la chambre de sac d'air (3) étant réalisées d'une seule pièce,
- l'enveloppe de générateur comprenant une coque supérieure et une coque inférieure, et
- la coque supérieure du générateur de gaz étant formée par une coiffe de diffuseur (4) pouvant être connectée à la chambre de générateur (2) et/ou à la chambre de sac d'air (3),
**caractérisé en ce que**
- un bord périphérique (7) du sac d'air (6) est reçu avec serrage entre la coiffe de diffuseur (4) et le boîtier d'airbag (1).

2. Boîtier d'airbag selon la revendication 1, **caractérisé en ce que**
la coque supérieure ou la coque inférieure est réalisée d'une seule pièce avec le boîtier d'airbag.

3. Boîtier d'airbag selon la revendication 1 ou 2, **caractérisé en ce que** la connexion entre la coiffe de diffuseur (4) et la chambre de générateur (2), ou entre la coiffe de diffuseur (4) et la chambre de sac d'air (3), est réalisée sous forme de connexion encliquetable (11, 12).

4. Boîtier d'airbag selon l'une quelconque des revendications précédentes, **caractérisé en ce que** l'unité d'allumage (9) est disposée dans un évidement de passage d'une paroi de la chambre de générateur (2).

5. Boîtier d'airbag selon la revendication 4, **caractérisé en ce que** l'évidement de passage est réalisé par surmoulage de l'unité d'allumage (9) lors du formage initial de la coque inférieure ou du boîtier d'airbag.

6. Boîtier d'airbag selon l'une quelconque des revendications 1 à 5, **caractérisé en ce que** la coque supérieure et/ou la coque inférieure comprennent par endroits des renforcements incorporés lors du formage ou surmoulés à base de fibres longues ou de fibres sans fin, ou par endroits des éléments de renforcement métalliques incorporés lors du formage ou surmoulés.

7. Boîtier d'airbag selon l'une quelconque des revendications 2 à 6, **caractérisé en ce qu'**une membrane de filtre est disposée sur la coiffe de diffuseur (4) pour inclure la charge propulsive.

8. Boîtier d'airbag selon la revendication 7, **caractérisé en ce que** la membrane de filtre est formée par un filtre métallique.
